(19) Europäisches Patentamt
European Patent Office
Office européen des brevets

(11) Veröffentlichungsnummer: **0 048 836**
**A2**

(12) **EUROPÄISCHE PATENTANMELDUNG**

(21) Anmeldenummer: **81106894.9**

(22) Anmeldetag: **03.09.81**

(51) Int. Cl.³: **B 29 D 27/00**, B 29 C 29/00, B 32 B 5/18, E 04 C 2/24

(30) Priorität: **01.10.80 DE 3037011**

(43) Veröffentlichungstag der Anmeldung: **07.04.82**
**Patentblatt 82/14**

(84) Benannte Vertragsstaaten: **BE DE FR GB IT**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Breitscheidel, Hans-Ulrich, Kapellenstrasse 43a, D-5200 Siegburg (DE)**
Erfinder: **Spielau, Paul, Dr., Van-Gogh-Platz 10, D-5210 Troisdorf-Eschmar (DE)**
Erfinder: **Alfter, Franz-Werner, Im Mittelfeld 36, D-5200 Siegburg (DE)**

(54) **Verfahren und Vorrichtung zum kontinuierlichen Herstellen eines bahnförmigen Schichtmaterials aus Schaumstoffteilchen.**

(57) Verfahren zum kontinuierlichen Herstellen eines bahnförmigen Schichtmaterials aus Schaumstoffteilchen, die auf eine Förderstrecke aufgestreut und während des Förderns oberflächlich auf eine Temperatur im Bereich zwischen 100 bis 160°C vorgewärmt werden, anschließend die so vorgewärmten Schaumstoffteilchen einer freien Fallstrecke zugeführt und während des Fallens oberflächlich weiter bis auf eine Temperatur von 200°C und mehr erwärmt werden und am Ende des freien Falles aufgeschüttet und zu einer Bahn vorverdichtet werden, anschließend die vorverdichtete Bahn unter gleichzeitigem Abkühlen kalibriert wird.

1
11
25
7
5
13
2
9
12
3
6
8
26
4
16
10
14
18
15
23
22
17
24
28
29
20
19
21
27

EP 0 048 836 A2

Troisdorf, den 9. Sept. 1980
OZ 80065 MG/Bd

DYNAMIT NOBEL AKTIENGESELLSCHAFT
Troisdorf Bez. Köln

# Verfahren und Vorrichtung zum kontinuierlichen Herstellen eines bahnförmigen Schichtmaterials aus Schaumstoffteilchen

Die Erfindung bezieht sich auf ein Verfahren zum kontinuierlichen Herstellen eines bahnförmigen Schichtmaterials aus Schaumstoffteilchen, die durch Zufuhr von Wärme zumindest oberflächlich erhitzt und unter Anwendung von Druck zu einem Formteil gewünschter Dicke und Dichte verbunden und abgekühlt werden. Eine Vorrichtung zur Durchführung des Verfahrens geht aus von einer Dosiervorrichtung für die Schaumstoffteilchen, einer Heizeinrichtung und einer zwischen zwei einander gegenüberliegenden endlos umlaufenden Bändern gebildeten Kalibriereinrichtung mit Kühleinrichtung.

Aus der deutschen Patentschrift 16 29 321 ist ein Verfahren und eine Vorrichtung zum kontinuierlichen Herstellen geschäumter Bahnen aus vollständig ausgeschäumten Kunststoffperlen insbesondere aus Polystyrol bekannt. Hierbei werden die aufgeschäumten Perlen einer gesteuerten Erwärmung durch Heißluft bei Atmosphärendruck unterzogen, um eine zusammenhängende praktisch noch unverformte Masse zu erhalten und anschließend erst bei Beibehaltung der Temperatur die Masse auf ihre endgültige Form zusammengedrückt und anschließend unter Beibehaltung des Druckes abgekühlt wird. Die Erwärmung der Perlen mit Heißluft erfolgt bei Temperaturen zwischen 103 und 130°C.

Dieses bekannte Verfahren nach der deutschen Patentschrift 16 29 321 eignet sich insbesondere für die Verarbeitung von Polystyrol. Würden jedoch andere thermoplastische Kunststoffe, wie beispielsweise Polyolefinschaumstoffe, PVC-Schaumstoffe o. dgl. eingesetzt, so sind wesentlich höhere Temperaturen erforderlich, um ein Verbinden durch oberflächliches Anschmelzen der Schaumstoffteilchen und Verschweißen untereinander bzw. Verkleben untereinander zu erzielen.

In der deutschen Patentschrift 26 22 777 ist nun bereits ein Verfahren zum kontinuierlichen Herstellen eines bahnförmigen Schichtmaterials aus elastischen Schaumstoffteilchen bekannt geworden, bei dem die Schaumstoffteilchen durch Erwärmung einer vorhandenen Schicht an dieser angeklebt werden und wobei durch nachfolgende Erhitzung der angeklebten Schaumstoffteilchen an ihrer Oberfläche bis zur Klebfähigkeit eine weitere Schicht Schaumstoffteilchen an diesen aufgebracht und angedrückt werden kann. Mit diesen Verfahren sind Bahnen aus Schaumstoffteilchen auch in Sandwichbauweise mit außenseitigen oder eingelegten Zwischenschichten aus anderen Materialien herstellbar.

Aufgabe der Erfindung ist es, ein kontinuierliches Verfahren zum Herstellen von bahnförmigen Schichtmaterialien aus geschäumten Schaumstoffteilchen wie Schnitzeln, Chips, Granulaten o. dgl. mittels Wärme zu schaffen, bei dem in einem einzigen Arbeitsvorgang Schichtmaterialien auch größerer Schichtdicke auch ausschließlich aus Schaumstoffteilchen hergestellt werden können.

Diese Aufgabe wird gemäß der Erfindung dadurch gelöst, daß Schaumstoffteilchen auf eine Förderstrecke aufgestreut und während des Förderns oberflächlich auf eine Temperatur im Bereich zwischen 100 bis 160°C vorgewärmt werden, anschließend die vorgewärmten Schaumstoffteilchen einer freien Fallstrecke zugeführt und während des Fallens oberflächlich bis weiter auf eine Temperatur von 200°C und mehr erwärmt werden und am Ende des freien Falles aufgeschüttet und zu einer Bahn vorverdichtet werden, anschließend die vorverdichtete Bahn unter gleichzeitigem Abkühlen kalibriert wird.

Das erfindungsgemäße Verfahren ermöglicht Schaumstoffteilchen, die zu ihrer Erwärmung und zum Überführen ihrer Oberfläche in einen plastischen und damit klebfähigen bzw. schweißfähigen Zustand höhere Temperaturen benötigen, zu Schnitzelbahnen größerer Dicken in einem Arbeitsgang zu verarbeiten. Ein wesentlicher Erfindungsgedanke ist darin zu sehen, daß die Erwärmung der Schaumstoffteilchen in zwei Stufen drucklos, d. h. bei Atmosphärendruck erfolgt. In der ersten Vorerwärmungsstufe, wenn die Schaumstoffteilchen noch nicht zu sehr klebrig werden an ihrer Oberfläche durch die Erhitzung, geschieht die Erwärmung während der Förderung mittels eines Förderbandes. In der zweiten Erwärmungsstufe, die auf sehr hohe Oberflächen-Temperaturen der Schaumstoffteilchen führt, wobei diese bereits in den plastischen Zustand übergehen können, erfolgt die Erwärmung im freien Fall, d. h. es besteht keine Gefahr, daß die so stark erwärmten Teilchen auf einer Unterlage unerwünscht festkleben. Die bis zum Verbinden miteinander erwärmten Schaumstoffteilchen werden dann in der gewünschten Höhe für die nachfolgende Dicke der herzustellenden Bahn aufgeschüttet, dieses wird durch die Geschwindigkeit eines die Schaumstoffteilchen sammelnden Transportbandes geregelt, und nachfolgend dann in zwei Stufen zu der gewünschten Bahn und Gestalt verpreßt.

Für das Vorverdichten der Schaumstoffteilchen wird ein Druck von 0,1 bis 1 kp/cm$^2$ aufgewendet, wobei sich dies sowohl nach der Dicke der herzustellenden Bahn als auch nach dem gewünschten Verdichtungsgrad richtet. Ähnliches gilt auch für den beim Kalibrieren aufzuwendenden Druck, der vorzugsweise in einem Bereich von 0,2 bis 5,0 kp/cm$^2$ liegt.

Für das erfindungsgemäße Verfahren können Schaumstoffteilchen unterschiedlicher Dichte, Größe, Farbe und Zusammensetzung aus gleichem oder unterschiedlichem Kunststoff verwendet werden. Es ist auch möglich, außer den Schaumstoffteilchen Füllstoffe und/oder Bindemittel zuzusetzen, wie z.B. Textilteilchen u. -fasern sowie textile Gewebereste o. dgl., Kunststoffabfälle in zerkleinerter Form.

Eine besonders vorteilhafte Verwendung finden Schaumstoffteilchen aus Polyolefinschaumstoffen, insbesondere vernetzten Polyolefinschaumstoffen, die relativ hohe Temperaturen benötigen, bis sie in einen klebfähigen bzw. schweißfähigen Zustand an ihrer Oberfläche übergehen, die jedoch dann zu haltbaren und je nach aufgewendeten Drücken und eingesetzten Schnitzelqualitäten mehr oder weniger kompakten Schnitzelbahnen führen. Das erfindungsgemäße Verfahren kann überall dort mit Vorteil eingesetzt werden, wo bei der Verarbeitung von Schaumstoffen Schnitzel, Abfälle, Randabfälle etc. in großen Mengen abfallen, die mit dem erfindungsgemäßen Verfahren zu bahnförmigen Schichtmaterialien verpreßt werden können.

Es ist auch möglich, in Weiterbildung des erfindungsgemäßen Verfahrens, die vorverdichtete bzw. kalibrierte Bahn ein- bzw. beidseitig mit einer Deckschicht aus kompakten oder porösen oder durchbrochenen Materialien in Gestalt von Folien, Geweben, Vliesen o. dgl. aus geschäumten oder ungeschäumten Kunststoffen, und/oder Metall, Holz, Textilien, Papier o. ä. zu verbinden.

Die so hergestellten Schnitzelbahnen sind poröser Natur und können beispielsweise als Dränageplatten oder vielfältig zur Isolierung im Bauwesen und im Tiefbau eingesetzt werden. Sie eignen sich auch als Schutzmatten beispielsweise an Hauswänden, auf begehbaren Dächern usw. Je nach Anwendungsgebiet der hergestellten Bahnen können diese mehr oder weniger durchlässig sein und durch Kaschieren mit entsprechenden Deckschichten weiteren Anwendungsgebieten angepaßt werden. Es ist auch möglich, die hergestellten Bahnen oberflächlich zu profilieren bzw. profilierte Stränge herzustellen, dieses richtet sich ausschließlich nach der entsprechenden Formgebung durch das Kalibrieren, d.h. durch die Kalibriereinrichtung.

Eine besonders vorteilhafte Ausführung des erfindungsgemäßen Verfahrens sieht vor, daß die Schaumstoffteilchen auf mindestens zwei voneinander unabhängig bezüglich ihrer Fördergeschwindigkeit regelbare Förderstrecken aufgestreut und einer gemeinsamen Fallstrecke zugeführt werden. Die Anwendung von zwei beheizbaren Förderstrecken hat den Vorteil, daß die Kapazität der Anlage einerseits erhöht werden kann, zum anderen die Vereinigung der vorgewärmten Schaumstoffteilchen in einer gemeinsamen Fallstrecke ein besseres Durchmischen derselben zur Folge hat. Ein weiterer wesentlicher Gesichtspunkt ist jedoch darin zu sehen, daß bei Einsatz von Schaumstoffteilchen unterschiedlicher Eigenschaften und damit auch unterschiedlicher Erwärmungszeiten die Förderbänder entsprechend unterschiedlich gesteuert werden können. Schaumstoffteilchen mit einem höheren Raumgewicht brauchen eine längere Zeit, um bis auf eine bestimmte Temperatur erhöht zu werden als Schaumstoffteilchen mit einem niedrigeren Raumgewicht, beispielsweise aus Polyolefinschaumstoffen. Bei Einsatz solcher Schaumstoffteilchen mit unterschiedlichen Raumgewichten ist es nun möglich, das Förderband, das Schaumstoffteilchen mit den höheren Raumgewichten fördert, mit einer geringeren Geschwindigkeit laufenzulassen, so daß am Ende des Förderbandes auch diese Schaumstoffteilchen die gewünschte Temperatur erreicht haben, während das Förderband, das die Schaumstoffteilchen mit dem niedrigeren Raumgewicht fördert, mit einer höheren Geschwindigkeit gefahren werden kann. Dennoch wird am Ende ein gleichmäßiges Produkt erhalten.

Die fertige Schichtdicke der hergestellten Bahn richtet sich nach der aufgeschütteten Höhe der erwärmten Schaumstoffteilchen und den nachfolgend aufgebrachten Drücken mit den daraus resultierenden Verdichtungen. Die Höhe der Schichtdicke der aufgeschütteten erwärmten Schaumstoffteilchen wird durch das die Schaumstoffteilchen am Ende der Fallstrecke sammelnden Transportbandes bestimmt. Nach einer ersten Vorverdichtung wird die vorverdichtete Bahn einer Kalibrierstrecke zugeführt, die während des Kalibrierens gleich die Abkühlung der Bahn übernimmt. Im ersten Teil der Kalibrierstrecke wird bevorzugt direkt mit Wasser gekühlt, das durch die Kalibrierstrecke und durch die poröse gepreßte Schnitzelbahn hindurchläuft und ggf. aufgesammelt und im Kreislauf wieder zurückgeführt wird, während im letzten Teil der Kalibrierstrecke mit Luft gekühlt wird, wobei gleichzeitig die Bahn getrocknet wird. Die fertig kalibrierte und gepreßte und je nach Ausbildung der Kalibrierbänder profilierte Bahn wird dann nachfolgend randbesäumt und zu beliebigen Formaten geschnitten in bekannter Weise.

Eine Vorrichtung zum Durchführen des erfindungsgemäßen Verfahrens ist vorteilhaft so ausgerüstet, daß mindestens ein endlos umlaufendes Förderband mit zugeordneter Heizeinrichtung zu einem Fallschacht vorgesehen ist, der an seinen Innenwänden mit Heizeinrichtungen ausgestattet ist und an den sich ein Transportband mit nachgeschalteter Verdichtungseinrichtung anschließt. Eine bevorzugte Ausbildung der erfindungsgemäßen Vorrichtung sieht vor, daß zwei endlos umlaufende Förderbänder mit getrennt voneinander regelbare Geschwindigkeit vorgesehen sind. Auf diese Weise wird eine schnelle gleichmäßige Vorerwärmung der Schaumstoffteilchen sichergestellt und zugleich eine gleichmäßigere Durchmischung und gleichmäßigere Aufstreuung der fertig erwärmten Schaumstoffteilchen auf dem Transportband, das zur Verdichtung führt. Darüber hinaus ermöglichen mehrere Transportbänder den Einsatz von Schaumstoffteilchen unterschiedlicher Eigenschaften, da durch entsprechende Einstellung der Heizeinrichtungen und der Fördergeschwindigkeiten der Förderbänder den für die spezifische Erwärmung der Schaumstoffteilchen erforderlichen Erwärmungszeiten und Wärmemengen gezielt Rechnung getragen werden kann.

Eine vorteilhafte Anordnung der Vorrichtung, insbesondere im Hinblick auf die Raumausnutzung sieht vor, daß die Förderbänder übereinander angeordnet sind und zwar bevorzugt über der Kalibriereinrichtung praktisch einen Drei-Etagen-Aufbau bildend. Hierbei können die Förderbänder leicht aus der Horizontalen geneigt angeordnet sein, wobei sie am Fallschacht möglichst dicht übereinander eintreffen, während sie an ihren anfangsseitigen Ende scherenartig auseinandergehen. Dieses hat den Vorteil, daß hier die Zuführeinrichtungen für die Schaumstoffteilchen angeordnet werden können.

Da die erwärmten Schaumstoffteilchen klebrig werden, ist es vorteilhaft, alle Bänder, die mit den erwärmten Schaumstoffteilchen in Berührung kommen, beispielsweise als Teflonbänder auszubilden und auch Abstreifvorrichtungen für klebengebliebene Schaumstoffteilchen vorzusehen.

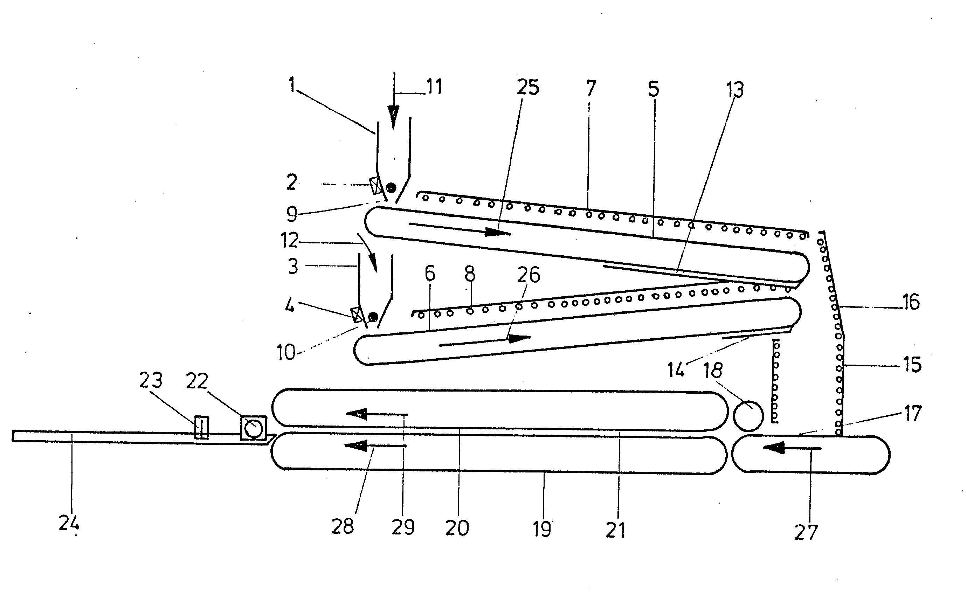

Weitere Ausbildungen der erfindungsgemäßen Vorrichtung sind in den Ansprüchen beschrieben und werden nachfolgend anhand des Ausführungsbeispieles in der Zeichnung noch erläutert.

In der Zeichnung ist das erfindungsgemäße Verfahren und eine erfindungsgemäße Vorrichtung zum Durchführen des Verfahrens schematisch dargestellt. Mit dem Verfahren und Vorrichtung ist es möglich, aus Schaumstoffteilchen, d. h. fertiggeschäumten Schaumstoffteilchen, Granulaten, Chips, Randabfällen usw. kontinuierlich endlose Bahnen oder profilierte Bahnen herzustellen, die je nach eingesetzten Qualitäten der Schaumstoffteilchen und Verdichtungsgraden mehr oder weniger durchlässig ausgebildet sind. Mit dem erfindungsgemäßen Verfahren und Vorrichtung können Bahnen bis 100 mm Dicke und mehr hergestellt werden.

Aus einem nicht dargestellten Vorratsbehälter für die Schaumstoffteilchen werden diese über nicht dargestellte Fördereinrichtungen zu den Dosiertrichtern 1, 3, siehe Pfeile 11, 12, gefördert. Die Dosiertrichter können ggf. noch mit einem Rüttler 2, 4 versehen sein. Am Ausgabeende der Dosiertrichter 1, 3 sind Streuwalzen 9, 10 angeordnet, so daß durch Drehzahländerung der Streuwalzen die Schaumstoffteilchendosierung d. h. die auf die nachfolgend angeordneten Förderbänder 5, 6 auf gegebene Menge von Schaumstoffteilchen geregelt werden kann. Für den Transport und die gleichzeitige oberflächlich Erwärmung der Schaumstoffteilchen in der ersten Erwärmungsstufe auf Temperaturen zwischen 100 bis 160°C sind die endlos umlaufenden Förderbänder 5, 6 vorgesehen. In dem gezeigten Beispiel, sind zwei Förderstrecken vorgesehen, die vertikal übereinander angeordnet sind. Die Förderbänder sind bevorzugt aus Teflongewebe, um ein Ankleben der Schaumstoffteilchen zu verhindern. Die Förderbänder 5, 6 sind getrennt regelbar in ihrer Geschwindigkeit, so daß die Verweilzeiten der Schaumstoffteilchen und damit die Erwärmungszeiten entsprechend den Anforderungen steuerbar sind. Die Pfeile 25, 26 zeigen die Umlaufrichtung der Förderbänder 5, 6 an. Über den Förderbändern sind die Heizeinrichtungen 7, 8, beispielsweise die IR-Strahler angeordnet. Der Abstand der Strahler zueinander und von den Förderbändern ist einstellbar. Die Förderbänder 5, 6 laufen zu dem Fallschacht 15. Sie sind leicht aus der Horizontalen geneigt, so daß sie am Anfang scherenförmig auseinandergehen, um hier die Zuführeinrichtungen für die Schaumstoffteilchen anordnen zu können. Zusätzlich sind die Förderbänder 5, 6 im Bereich des Fallschachtes und in den Bereichen, in denen sie einander nahe zugeordnet sind, mit Hitzeschildern 13, 14 ausgerüstet, um die umlaufenden Bänder 5, 6 in den gefährdeten Bereichen gegen die rückseitige Strahlung der Heizeinrichtungen 7, 8 zu schützen. Im Bereich der Bandumlenkung am Fallschacht sind die Hitzeschilder noch mit nicht näher dargestellten Abstreifern für klebengebliebene Schaumstoffteilchen versehen.

Die Schaumstoffteilchen fallen im Bereich des Fallschachtes 15 von den Förderbändern 5, 6 in freiem Fall durch den Fallschacht auf das am Ende des Fallschachtes endlos umlaufende Transportband 17. Beim Fallen durch den Fallschacht findet ein gleichmäßiges regelloses Durchmischen der erwärmten Schaumstoffteilchen statt. Darüber hinaus ist der Fallschacht, der vorzugsweise seitlich geschlossen beispielsweise in Rechteckform oder auch in anderer Kreisform ausgebildet ist, an seinen Innenseiten mit Heizeinrichtungen 16, beispielsweise IR-Strahlern ausgerüstet. Damit werden die durch den Fallschacht fallenden Schaumstoffteilchen zusätzlich oberflächlich weiter erwärmt, wobei Temperaturen bis 200°C und mehr, je nach Qualität der Schaumstoffteilchen erreicht werden. Am Ende des Fallschachtes ist das Umlaufen der Transportband 17, ebenfalls ein Teflonband, das in Pfeilrichtung 27 umläuft, vorgesehen. Die Geschwindigkeit dieses Transportbandes, das zugleich eine Sammelfunktion für die auffallenden erwärmten Schaumstoffteilchen hat, ist regelbar. Je nach der Geschwindigkeit richtet sich dann die Höhe der aufgeschütteten Schaumstoffteilchen, woraus sich die fertige Dicke der herzustellenden Bahn richtet. Die auf dem Transportband 17 aufgeschütteten erwärmten Schaumstoffteilchen werden dann am Ende des Transportbandes 17 einer Vorverdichtung mittels der Walze 18 unterworfen. Der Spalt zwischen Walze 18 und Transportband 17 ist einstellbar, je nach gewünschter Dicke der herzustellenden Bahn.

Die vorverdichtete Bahn läuft dann anschließend direkt in eine Kalibrier- und Kühlstrecke ein, wobei die Kalibrierstrecke 21 von den zwei endlos umlaufenden Kettenbändern 19, 20, Umlaufrichtung s. Pfeile 28, 29, gebildet wird. Die Geschwindigkeit der Bänder 19, 20 ist ebenso regelbar und zwar anpaßbar an die Geschwindigkeit des Transportbandes 17. Ebenfalls ist die Dicke d. h. der Abstand

0048836

zwischen den Kettenbändern 19, 20 voneinander einstellbar. Durch die Zwischenräume der Kettenbänder erfolgt die Kühlung beispielsweise mit Wasserduschen von oben, wobei das Wasser durch die Kettenbänder und die verdichtete Bahn hindurchläuft und in einer nicht dargestellten Bodenwanne wieder aufgefangen werden kann. Im letzten Teil der Kalibrierstrecke sind bevorzugt Luftduschen, die ebenfalls nicht dargestellt sind, angeordnet, wodurch einerseits die Bahn getrocknet und zudem weiter gekühlt wird.

Nach Verlassen der Kalibrierstrecke wird die fertige Bahn mit einer Schneidevorrichtung 22 in Längsrichtung an den Rändern gesäumt und ggf. geteilt und anschließend mittels einer Quersägeeinrichtung abgelängt. Nach dem Schneiden gleiten die abgeschnittenen Platten von der Bahn über den Tisch 24 und werden von hier abtransportiert.

Die in der Zeichnung dargestellte Ausführung der übereinander etagenmäßig vorgesehenen Anordnung von Kalibrierstrecke und Förderbändern 5, 6 ist besonders raumsparend. Es ist jedoch genauso möglich, die Förderbänder 5, 6 in einer Ebene anzuordnen, und es ist auch möglich, noch ein drittes Förderband ggf. für Füllstoffe oder Bindemittel dem Fallschacht zuzuordnen.

Troisdorf, den 9. Sept. 1980
OZ 80065 MG/Bd

## Patentansprüche

1. Verfahren zum kontinuierlichen Herstellen eines bahnförmigen Schichtmaterials aus Schaumstoffteilchen, die durch Zufuhr von Wärme zumindest oberflächlich erhitzt und unter Anwendung von Druck zu einem Formteil gewünschter Dicke und Dichte verbunden und abgekühlt werden, dadurch gekennzeichnet, daß Schaumstoffteilchen auf eine Förderstrecke aufgestreut und während des Förderns oberflächlich auf eine Temperatur im Bereich zwischen 100 bis 160°C vorgewärmt werden, anschließend die so vorgewärmten Schaumstoffteilchen einer freien Fallstrecke zugeführt und während des Fallens oberflächlich weiter bis auf eine Temperatur von 200°C und mehr erwärmt werden und am Ende des freien Falles aufgeschüttet und zu einer Bahn vorverdichtet werden, anschließend die vorverdichtete Bahn unter gleichzeitigem Abkühlen kalibriert wird.

2. Verfahren nach Anspruch 1, dadurch gekennzeichnet, daß zum Vorverdichten der Schaumstoffteilchen ein Druck von 0,1 bis 1,0 kp/cm² ausgeübt wird.

3. Verfahren nach Anspruch 1 oder 2, dadurch gekennzeichnet, daß beim Kalibrieren der Bahn ein Druck von 0,2 bis 5,0 kp/cm² ausgeübt wird.

4. Verfahren nach einem der Ansprüche 1 bis 3, dadurch gekennzeichnet, daß Schaumstoffteilchen unterschiedlicher Dichte aus gleichem oder unterschiedlichem Kunststoff verwendet werden.

5. Verfahren nach einem der Ansprüche 1 bis 4, dadurch gekennzeichnet, daß Schaumstoffteilchen aus Polyolefinschaumstoffen, insbesondere vernetzten Polyolefinschaumstoffen verwendet werden.

6. Verfahren nach einem der Ansprüche 1 bis 5, dadurch gekennzeichnet, daß außer den Schaumstoffteilchen Füllstoffe und/oder Bindemittel eingesetzt werden.

7. Verfahren nach einem der Ansprüche 1 bis 6, dadurch gekennzeichnet, daß die vorverdichtete bzw. kalibrierte Bahn ein-bzw. beidseitig mit einer Deckschicht aus kompakten oder porösen oder durchbrochenen Materialien in Gestalt von Folien, Geweben, Vliesen oder dgl. aus geschäumten oder ungeschäumten Kunststoffen, und/oder Metall, Holz, Textilien, Papier o. ä. verbunden wird.

8. Verfahren nach einem der Ansprüche 1 bis 7, dadurch gekennzeichnet, daß die Schaumstoffteilchen auf mindestens zwei voneinander unabhängig bezüglich ihrer Fördergeschwindigkeit regelbare Förderstrecken aufgestreut werden und einer gemeinsamen Fallstrecke zugeführt werden.

9. Verfahren nach einem der Ansprüche 1 bis 8, dadurch gekennzeichnet, daß die Bahn in der Anfangsphase des Kalibrierens mittels Wasser direkt gekühlt und in der Endphase des Kalibrierens mittels Luft gekühlt und getrocknet wird.

10. Vorrichtung zum Durchführen des Verfahrens nach einem der Ansprüche 1 bis 9, mit einer Dosiervorrichtung für die Schaumstoffteilchen, einer Heizeinrichtung und einer zwischen zwei einander gegenüberliegenden endlos umlaufenden Bändern gebildeten Kalibriereinrichtung mit Kühleinrichtung, dadurch gekennzeichnet, daß mindestens ein endlos umlaufendes Förderband (5, 6) mit zugeordneter Heizeinrichtung (7, 8) zu einem Fallschacht (15) vorgesehen ist, der an seinen Innenwänden mit Heizeinrichtungen ausgestattet ist und dem sich ein Transportband (17) mit nachgeschalteter Verdichtungseinrichtung (18, 19, 20) anschließt.

11. Vorrichtung nach Anspruch 10, dadurch gekennzeichnet, daß zwei endlos umlaufende Förderbänder (5, 6) mit getrennt voneinander regelbarer Geschwindigkeit vorgesehen sind.

12. Vorrichtung nach Anspruch 11, dadurch gekennzeichnet, daß die Förderbänder übereinander angeordnet sind.

13. Vorrichtung nach einem der Ansprüche 10 bis 12, dadurch gekennzeichnet, daß die Förderbänder (5, 6) und Transportband (17) mit Teflonbändern ausgerüstet sind

14. Vorrichtung nach einem der Ansprüche 10 bis 13, dadurch gekennzeichnet, daß der Fallschacht (15) seitlich geschlossen ausgebildet ist.

15. Vorrichtung nach einem der Ansprüche 10 bis 14, dadurch gekennzeichnet, daß am Ende des Transportbandes (17) eine Walze (18) angeordnet ist, wobei der zwischen Transportband (17) und Walze (18) gebildete Spalt zur Vorverdichtung der durchlaufenden Schaumstoffteilchen dient.

16. Vorrichtung nach einem der Ansprüche 10 bis 15, dadurch gekennzeichnet, daß die Kalibrierstrecke (21) zwischen zwei endlos umlaufenden Kettenbändern (19, 20) mit einstellbarem Abstand voneinander gebildet ist, wobei dem Anfangsbereich der Kalibrierstrecke Wasserduschen und dem Endbereich Luftduschen zugeordnet sind.

17. Vorrichtung nach einem der Ansprüche 10 bis 16, dadurch gekennzeichnet, daß die Kalibrierstrecke (21) mit den Kettenbändern (19, 20), und die Fördereinrichtung mit den Förderbändern (5, 6) übereinander angeordnet sind.

0048836

1/1

1
2
3
4
5
6
7
8
9
10
11
12
13
14
15
16
17
18
19
20
21
22
23
24
25
26
27
28
29

Dynamit Nobel Aktiengesellschaft